# EUROPÄISCHE PATENTSCHRIFT

(11) **EP 1 055 562 B1**
(45) Veröffentlichungstag und Bekanntmachung des Hinweises auf die Patenterteilung: **12.11.2003**
(21) Anmeldenummer: 00110868.7
(22) Anmeldetag: 23.05.2000
(51) Int. Cl.: B60R 11/02, H04M 1/06

(54) **Halterung für Funktelefon**
Holder for a radiotelephone
Support pour un radiotéléphone

(30) Priorität: 28.05.1999 DE 29909215 U
(43) Veröffentlichungstag der Anmeldung: 29.11.2000
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Patentanwälte Eisele, Otten, Roth & Dobler

(56) Entgegenhaltungen:
- DE-U- 9 102 981
- DE-U- 29 821 166
- GB-A- 2 317 530
- US-A- 5 282 246
- PATENT ABSTRACTS OF JAPAN vol. 1995, no. 08, 29. September 1995 (1995-09-29) & JP 07 135521 A (FUJITSU TEN LTD), 23. Mai 1995 (1995-05-23)

## Beschreibung

Die Erfindung betrifft eine Vorrichtung nach dem Oberbegriff des Anspruchs 1.

Derartige Vorrichtungen kommen in Fahrzeugen zum Einsatz, um ein Funktelefon sicher zu halten und elektrisch mit im Fahrzeug eingebauten Komponenten wie zum Beispiel Freisprecheinrichtungen und Fahrzeugaußenantennen zu verbinden.

Eine Halterung ist aus der WO 97/25223 bekannt. Diese Halterung besitzt einen um eine horizontale Achse drehbaren Aufnahmeschacht mit einer Kontakteinheit, in den das Funkgerät mit seinem der Sprechmuschel nahen Ende eingesteckt wird. Eine Arretierung des Funktelefons in der Halterung erfolgt durch ein gemeinsames Verschwenken des Funktelefons gemeinsam mit dem Aufnahmeschacht in die Horizontale. In dieser Stellung wird das der Hörmuschel nahe Ende des Funktelefons von eine Klaue umfaßt und in der Horizontalen niedergehalten. Die Halterung für das Funktelefon wird rastend und wieder lösbar von einer Aufnahme aufgenommen, so daß das Funktelefon auch gemeinsam mit der Halterung aus der Aufnahme genommen werden kann.

Weiterhin ist eine Halterung aus der WO 98/40244 bekannt. Diese Halterung besteht im Wesentlichen aus einer Aufnahmeschale mit Kontakteinheit, in die das Funktelefon zunächst mit seinem der Sprechmuschel nahen Ende schräg angelegt wird. Dieser Bewegung folgt eine Drehbewegung des Funktelefons um das der Sprechmuschel nahe Ende auf die Aufnahmeschale zu. In dieser Stellung wird das der Hörmuschel nahe Ende dann von einer gefedert gelagerten Klaue übergriffen.

Aus dem Stand der Technik ist auch eine Halterung für Funktelefone bekannt, bei der das Funktelefon zunächst in eine Halterung eingerastet wird. Die Kontaktierung erfolgt anschließend über ein Kabel, dessen Stecker in einer in der Halterung angeordneten nach oben geöffneten Führung verschieblich gelagert ist. zur Kontaktierung wird dieser Stecker von Hand in Richtung des Funktelefons geschoben. Der Stecker rastet mit Rastnasen in der Steckeraufnahme des Funktelefons ein. Dadurch, daß die Führung für den Stecker nach oben geöffnet ist, kann das Funktelefon gemeinsam mit dem Stecker und dem dazugehörigen Kabel aus der Halterung entnommen werden. Ein Entkoppeln des in der Halterung gelagerten Funktelefons vom Stecker erfolgt durch eine komplizierte Zieh- und Druckbewegung, mit der der Stecker von Hand aus der Steckeraufnahme am Funktelefon entkoppelt wird. Diese Entkoppelbewegung ist schwierig, da der Stecker nur schlecht gegriffen werden kann, und gleichzeitig zur Zugbewegung auch eine Druckbewegung ausgeführt werden muß, um die Verrastung des Steckers in der Steckeraufnahme des Funktelefons zu lösen.

Aus dem Dokument DE 298 21 166 U ist eine Vorrichtung zur Halterung und Kontaktierung nach dem Oberbegriff des Anspruchs 1 bekannt geworden. Bei diesem Stand der Technik befindet sich das Funktelefon in einer stationären Schale mit Kontaktierungsmitteln während ein gegenüberliegender, beweglicher Schlitten zur Fixierung des Funktelefons dient.

Nachteilig hieran ist die Tatsache, dass die Kontaktierungsmittel in der stationär angeordneten Schale angeordnet sind, so dass eine Beschädigung dieser Kontaktierungsmittel bei unsachgemäßer Handhabung des Funktelefons erfolgen kann.

Weiterhin ist aus der DE 91 02 981 U eine Halterung für ein Funktelefon bekannt geworden, welches ebenfalls eine Längsverschiebbarkeit des Funktelefons erlaubt. Auch hier sind die Kontaktierungsmittel im stationären Teil der Halterung angebracht.

Schließlich zeigt das Dokument GB 2 317 530 A eine Halterung, die zur Aufnahme eines Funktelefons dient. Eine schlittenförmige Verschiebbarkeit von Halterungsteilen ist nicht vorgesehen.

Der Erfindung liegt die Aufgabe zugrunde, eine Vorrichtung zur Halterung und Kontaktierung eines Funktelefons zu entwickeln, die sich einfach bedienen läßt und kostengünstig hergestellt werden kann.

Weitere Aufgabe der Erfindung ist es, eine Vorrichtung zur Halterung und Kontaktierung eines Funktelefons vorzuschlagen, die sowohl für die zuverlässige Kontaktierung von elektrischen Verbindungen, bei denen das Funktelefon Pinstifte und der Stecker hülsen- oder gabelförmige Mutterkontakte aufweist, als auch für elektrische Verbindungen, bei denen das Funktelefon Kontaktflächen und der Stecker federnde Kontaktstifte aufweist, geeignet ist.

Diese Aufgabe wird in Verbindung mit dem Oberbegriff des Anspruchs 1 erfindungsgemäß durch die kennzeichnenden Merkmale des Patentanspruchs 1 gelöst.

Die erfindungsgemäße Vorrichtung zur Halterung und Kontaktierung eines Funktelefons besteht aus einer Schale, in die das Funktelefon mit seiner Rückseite eingelegt wird, und einem Schlitten, der eine Kontakteinheit zum elektrischen und/oder mechanischen Eingriff in eine Schnittstelle des Funktelefons aufweist. Durch den linear verfahrbaren Schlitten kann auf einfache Weise elektrischer Kontakt zwischen der Vorrichtung und dem Funktelefon hergestellt werden. Durch die Führungen des Schlittens wird ein Verkanten der Kontakteinheit zur Schnittstelle sicher vermieden. Somit kann auch ein Funktelefon, dessen Schnittstelle Pinstifte aufweist schnell, sicher und ohne Gefahr einer Beschädigung der Pinstifte kontaktiert werden. Weiterhin gewährleistet der Schlitten eine gute Greifbarkeit.

Gemäß einer vorteilhaften Ausführungsform des Erfindungsgegenstandes übergreift ein dem Schlitten gegenüberliegender Bereich der Halterung das Funktelefon. Auf diese Weise wird erreicht, daß das Funktelefon, sobald der Schlitten aufgeschoben ist, von zwei Seiten fest in der Halterung gehalten wird und selbst bei einem Verkehrsunfall in der Halterung verbleibt.

Weiterhin ist es vorteilhaft, wenn ein dem Schlitten gegenüberliegend an der Halterung angeordneter Dorn in das Gehäuse des Funktelefons greift. Auf diese Weise wird das Funktelefon ebenfalls sicher in der Halterung gehalten.

Nach einer besonders bevorzugten Ausführungsform des Erfindungsgegenstandes ist vorgesehen, daß der Schlitten in mindestens einer seiner Stellungen rastet. Hierbei kann vorgesehen sein, daß der Schlitten, in der das Funktelefon haltenden und/oder in der das Funktelefon freigebenden Stellung rastet. Dies bringt den Vorteil, daß in der das Funktelefon haltenden Stellung des Schlittens die Kontaktierung auch bei Erschütterungen sicher bestehen bleibt, auch wenn die Kontaktierung selbst keine Hilfsmittel aufweist, die ein Lösen der Kontakte verhindert. Ein Rasten des Schlittens in der das Funktelefon freigebenden Stellung ist vorteilhaft, da dann das Funktelefon nach einer Entnahme sofort wieder in die Halterung eingelegt werden kann, ohne daß der Schlitten zuvor zurückgeschoben werden muß.

Weiterhin ist es vorteilhaft, wenn der Schlitten in seiner das Funktelefon freigebenden Stellung durch eine mechanische oder elektrische Sperre blockiert ist, solange das Funktelefon nicht korrekt in der Schale zur Aufnahme des Funktelefons liegt. Somit wird verhindert, daß der Schlitten aus Versehen in die das Funktelefon haltende Position geschoben wird und somit das Einlegen erschwert. Weiterhin bewahrt diese Einrichtung das Funktelefon bzw. die Halterung vor Beschädigungen, da unterbunden wird, daß der Schlitten in die das Funktelefon haltende Position geschoben wird, solange das Funktelefon noch nicht korrekt in der Aufnahme liegt.

Gemäß der Erfindung stützt sich das Funktelefon an der Schale insbesondere gegen eine Abziehbewegung und gegen eine Aufschiebbewegung des Schlittens ab. Somit wird verhindert, daß sich das Funktelefon bei der Abziehbewegung unter der Schale verkeilt bzw. daß das Funktelefon bei der Aufschiebebewegung aus der Schale geschoben wird.

Weiterhin ist es vorteilhaft, wenn das zu einer Freisprechund Fernbedieneinrichtung führende Kabel direkt mit dem Schlitten verbunden ist. Somit wird eine aufwendige Kabelführung von der Schale der Halterung zum Schlitten der Halterung vermieden und eine kostengünstige Herstellung der Halterung begünstigt.

Weitere Einzelheiten der Erfindung werden in der Zeichnung anhand von schematisch dargestellten Ausführungsbeispielen beschrieben.

Hierbei zeigt
- Fig. 1: ein Funktelefon und eine Halterung, in der der Schlitten in einer das Funktelefon freigebenden Stellung steht,
- Fig. 2: eine Halterung mit eingelegtem Funktelefon, bei der der Schlitten in einer das Funktelefon freigebenden Stellung steht,
- Fig. 3: eine Halterung mit eingelegtem Funktelefon, bei der der Schlitten in einer das Funktelefon haltenden Stellung steht.

### Beschreibung der Ausführungsbeispiele:

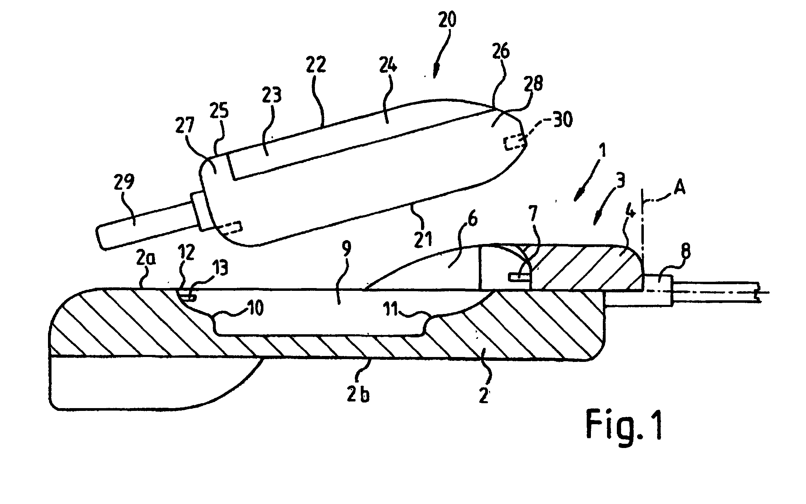

In Fig. 1 ist eine Halterung 1 in einer geschnittenen Seitenansicht dargestellt. Die Halterung 1 besteht aus einer Schale 2 mit einer Oberseite 2a und einer Unterseite 2b. An der Oberseite 2a der Schale 2 ist ein Schlitten 3 linear beweglich gelagert. Der Schlitten 3 weist einen Schlittenkopf 4 mit in der Ansicht der Fig. 1 nicht zu sehenden Griffmulden 5 und einem Schlittenausleger 6 auf. Weiterhin weist der Schlitten 3 eine am Schlittenkopf 4 gelagerte Kontakteinheit 7 auf. Die Kontakteinheit 7 ist elektrisch mit einer Kabelzuführung 8 verbunden.

Die Schale 2 weist an ihrer Oberseite 2a eine Mulde 9 auf. Diese Mulde besitzt Schultern 10, 11. Weiterhin besitzt die Mulde 9 eine dem Schlitten 3 gegenüberliegende Hintergriffigkeit 12. Diese Hintergriffigkeit 12 ist in Fig. 1 als Nase 13 dargestellt. Nach einer nicht dargestellten Ausführungsvariante ist die Hintergriffigkeit 12 als Übergriff ausgeführt.

In Fig. 1 ist auch ein Funktelefon 20 in Seitenansicht dargestellt. Das Funktelefon 20 besitzt eine Rückseite 21 und eine Vorderseite 22, wobei die Vorderseite 22 ein Display 23, eine Tastatur 24, eine Hörmuschel 25 und eine Sprechmuschel 26 aufweist. Im Bereich der Hörmuschel 25 bildet das Funktelefon 20 einen Kopfbereich 27 aus. Im Bereich der Sprechmuschel 26 bildet das Funktelefon 20 einen Fußbereich 28 aus. Im Kopfbereich 27 ist eine Antenne 29 und im Fußbereich 28 ist eine Schnittstelle 30 ausgebildet.

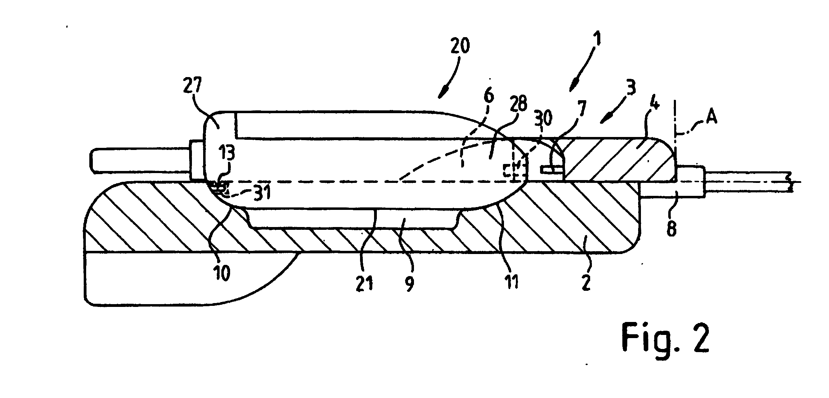

Fig. 2 zeigt die Halterung 1 mit eingelegtem Funktelefon 20 in Seitenansicht. Der Schlitten 3 der Halterung 1 steht in einer das Funktelefon 20 freigebenden Position A. Das Funktelefon 20 liegt mit seiner Rückseite 21 in der Mulde 9 der Halterung 1. In dieser Position greift die Nase 13 in eine Ausnehmung 31 im Kopfbereich 27 des Funktelefons 20 ein. Der Eingriff der Nase 13 in die Ausnehmung 31 wird dadurch hergestellt, daß das Funktelefon 20 zunächst mit seinem Kopfbereich 27 an die Schulter 10 der Mulde 9 der Schale 2 angelegt wird. Danach wird es so im Uhrzeigersinn verschwenkt, daß es mit seinem Fußbereich 28 bzw. seiner Rückseite 21 auf der Schulter 11 der Mulde 9 zu liegen kommt.

In Fig. 2 ist zu sehen, daß die Kontakteinheit 7 und die Schnittstelle 30 in der Position A des Schlittens 3 nicht miteinander in Eingriff stehen. Auch der Schlittenkopf 4 weist keinen Kontakt zum Fußbereich 28 des Funktelefons 20 auf. Der Schlittenausleger 6 liegt so über der Mulde 9 der Schale 2, daß er die Mulde 9 nicht überdeckt und somit ein störungsfreies Einlegen des Funktelefons 20 erlaubt. In Fig. 2 ist weiterhin zu sehen, daß sich die Kabelzuführung 8 an der Schale 2 abstützt und somit nicht gemeinsam mit dem Schlitten 3 bewegt wird. Der Längenausgleich zwischen der Kontakteinheit 7 und der Kabelzuführung 8 erfolgt durch in Fig. 2 nicht dargestellte Kabel, die sich im Innenbereich des Schlittenkopfes 4 und der Schale 2 frei bewegen können. Gemäß einer nicht dargestellten Ausführungsvariante ist die Kabelzuführung 8 direkt am Schlittenkopf 4 gelagert und wird mit diesem gemeinsam bewegt.

Gemäß einer weiteren Ausführungsvariante ist es vorgesehen, daß die Kabelzuführung 8 an der Schale 2 angebracht ist und die Kontaktierung von der Schale 2 zum Schlittenkopf 4 bzw. zur Kontakteinheit 7 über Schleifkontakte erfolgt.

Gemäß einer nicht dargestellten Ausführungsvariante zur Nase 13 ist die Hintergriffigkeit 12 als Übergriff ausgebildet, der den Kopfbereich 27 des Funktelefons 20 bis zum Display 23 hin übergreift.

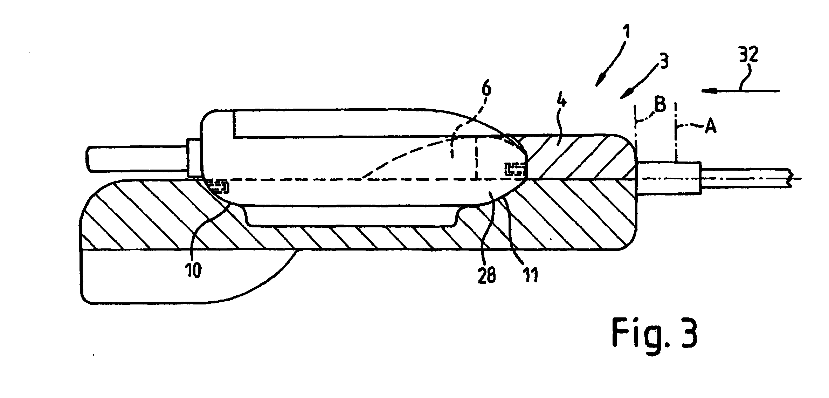

Fig. 3 zeigt wiederum eine geschnittene Seitenansicht der Halterung 1 mit eingelegtem Funktelefon. Im Unterschied zu Fig. 2 steht in Fig. 3 der Schlitten 3 in einer das Funktelefon haltenden Position B. In dieser Position B hat der Schlittenkopf 4 Kontakt mit dem Fußbereich 28 des Funktelefons 20 und übergreift diesen. Weiterhin übergreift der Schlittenausleger 6 den Fußbereich 28 des Funktelefons 20 in links und rechts der Sprechmuschel 26 liegenden Bereichen. Durch diese Übergriffe ist das Funktelefon 20 sicher in der Schale 2 der Halterung 1 gehalten. Die Kontaktierung der Schnittstelle 30 des Funktelefons 20 mit der Kontakteinheit 7 des Schlittens 3 ist in Figur 3 erfolgt. Die Kontakteinheit 7 wird gemeinsam mit dem Schlitten 3 in einer linearen Bewegung in Richtung des Pfeiles 32 auf den Fußbereich 28 des Funktelefons 20 aufgeschoben. Somit wird wirksam verhindert, daß die Kontakteinheit 7 gegenüber der Schnittstelle 30 verkantet und das Aufschieben erschwert. Ein Ausweichen des Funktelefons 20 vor der Aufschiebebewegung ist nicht möglich, da sich das Funktelefon 20 mit dem Kopfbereich 27 an der Schulter 10 der Ausnehmung 9 entgegen der Pfeilrichtung 32 abstützt.
Eine Entnahme des Funktelefons 20 aus der Halterung 1 erfolgt durch eine Zurückziehen des Schlittens 3 entgegen der Pfeilrichtung 32. Bei diesem Zurückziehen stützt sich das Funktelefon 20 mit dem Fußbereich 28 gegen die Schulter 11 der Schale 9 ab. Auf diese Weise wird verhindert, daß sich das Funktelefon 20 unter dem Schlitten 3 verkeilt. Beim Zurückziehen des Schlittens 3 wird das Funktelefon 20 von der Überdeckung durch den Schlittenausleger 6 befreit und gleichzeitig wird die elektrische Verbindung zwischen der Kontakteinheit 7 und der Schnittstelle 30 gelöst. Der Schlitten 3 rastet in der das Funktelefon freigebenden Position A ein.

Die Rastvorrichtung für den Schlitten 3 an der Schale 2 ist so ausgebildet, daß der Schlitten 3 Mulden aufweist, in die eine an der Schale gefedert gelagerte Kugel einschnappt. Durch eine Erhöhung des Schiebedrucks kann diese Rastung gelöst werden.

Nach einer nicht dargestellten Ausführungsvariante ist vorgesehen, als Rastelemente Federarme vorzusehen, die in Ausnehmungen im Schlitten 3 greifen und über Drucktasten wieder aus diesen Ausnehmungen gelenkt werden können.

Eine weiter nicht dargestellte Konstruktionsvariante sieht vor, daß der Fußbereich 28 des Funktelefons 20 nicht vom Schlitten 3 übergriffen wird. Eine Fixierung des Funktelefons 20 erfolgt ausschließlich über die Kontakteinheit 7 und die Schnittstelle 30. Hierbei steht die Kontakteinheit 7 mit der Schnittstelle 30 in formschlüssigem Eingriff.

Weiterhin ist eine nicht dargestellte Ausführungsvariante vorgesehen, bei der drei Kontakteinheiten in drei Schnittstellen eingreifen. Hierbei ist die mittlere Kontakteinheit und die mittlere Schnittstelle als elektrische Kontakteinheit ausgeführt. Die beiden anderen Kupplungspaare sind als mechanische Kupplungspaare ausgebildet, die der Zentrierung des elektrischen Kupplungspaares und der Halterung des Funktelefons dienen.

Die Erfindung ist nicht auf dargestellte oder beschriebene Ausführungsbeispiele beschränkt. Sie umfaßt auch vielmehr Weiterbildungen der Erfindung im Rahmen der Schutzrechtsansprüche. Insbesondere sieht die Erfindung auch eine Daten- und/oder Energieübertragung von Funktelefonen zur Halterung und umgekehrt vor. Diese kann kontaktlos, z.B. über Infrarotschnittstelle oder dergleichen, oder über mechanische Kontaktierungsmittel erfolgen.

### Bezugszeichenliste:

- 1: Halterung
- 2: Schale
- 2a: Oberseite
- 2b: Unterseite
- 3: Schlitten
- 4: Schlittenkopf
- 5: Griffmulde
- 6: Schlittenausleger
- 7: Kontakteinheit
- 8: Kabelzuführung
- 9: Mulde
- 10: Schulter
- 11: Schulter
- 12: Hintergriffigkeit
- 13: Nase
- 20: Funktelefon
- 21: Rückseite
- 22: Vorderseite
- 23: Display
- 24: Tastatur
- 25: Hörmuschel
- 26: Sprechmuschel
- 27: Kopfbereich
- 28: Fußbereich
- 29: Antenne
- 30: Schnittstelle
- 31: Ausnehmung

## Patentansprüche

1. Vorrichtung zur Halterung und Kontaktierung eines Funktelefons (20), wobei die Halterung des Funktelefons (20) über eine aus einer Schale (2) mit Schlitten (3) bestehenden Haltevorrichtung bzw. Halterung (1) erfolgt, wobei der Schlitten (3) linear gegen das eingelegte Funktelefon (20) verschiebbar ist **dadurch gekennzeichnet, daß** der Schlitten (3) Kontaktierungsmittel (7) bzw. mindestens eine Kontaktierungseinheit (7) zur Datenund/oder Energieübertragung bzw. zur elektrischen und/oder optischen Ankopplung auf mindestens eine Schnittstelle am Funktelefon aufweist, und daß sich bei einer Abziehbewegung des Schlittens (3) weg vom Funktelefon (20) dieses sich an der Schale (9) abstützt.

2. Vorrichtung nach einem der vorhergehenden Ansprüche, **dadurch gekennzeichnet, daß** ein dem Schlitten (3) gegenüberliegenden Bereich der Schale (9) das Funktelefon (20) übergreift.

3. Vorrichtung nach einem der vorhergehenden Ansprüche, **dadurch gekennzeichnet, daß** eine dem Schlitten (3) gegenüberliegend angeordnete Nase (13) in den Kopfbereich (27) des Funktelefons (20) greift.

4. Vorrichtung nach Anspruch 1, **dadurch gekennzeichnet, daß** der Schlitten (3) in mindestens einer seiner Stellungen rastet.

5. Vorrichtung nach einem der vorhergehenden Ansprüche, **dadurch gekennzeichnet, daß** der Schlitten (3) in der das Funktelefon (20) haltenden und/oder in der das Funktelefon (20) freigebenden Stellung rastet.

6. Vorrichtung nach einem der vorhergehenden Ansprüche, **dadurch gekennzeichnet, daß** die Kontaktierungseinheit (7) gefederte Kontaktstifte aufweist.

7. Vorrichtung nach einem der vorhergehenden Ansprüche, **dadurch gekennzeichnet, daß** die Kontaktierungseinheit (7) Kontakthülsen oder Kontaktgabeln zur Aufnahme von Kontaktstiften aufweist.

8. Vorrichtung nach einem der vorhergehenden Ansprüche, **dadurch gekennzeichnet, daß** der Schlitten (3) in seiner das Funktelefon (20) freigebenden Stellung durch eine mechanische oder elektrische Sperre blockiert ist solange das Funktelefon nicht korrekt in der Schale (9) zur Aufnahme des Funktelefons (20) liegt.

9. Vorrichtung nach einem der vorhergehenden Ansprüche, **dadurch gekennzeichnet, daß** der Schlitten (3) mindestens eine Griffmulde zur Betätigung aufweist.

10. Vorrichtung nach einem der vorhergehenden Ansprüche, **dadurch gekennzeichnet, daß** sich das Funktelefon (20) bei einer Aufschiebebewegung des Schlittens (3) gegen des Funktelefon an der Schale (9) abstützt.

11. Vorrichtung nach einem der vorhergehenden Ansprüche, **dadurch gekennzeichnet, daß** die Kabelzuführung (8) direkt mit dem Schlitten (3) verbunden ist.

12. Vorrichtung nach einem der vorhergehenden Ansprüche, **dadurch gekennzeichnet, daß** die Halterung (1) neben der elektrischen Kontaktierungseinheit (7) eine mechanische Kontaktierung des Funktelefons (20) aufweist.

## Claims

1. A device for holding and contacting a radio telephone (20), wherein the holding of the radio telephone (20) takes place via a holding device or holder (1) consisting of a shell (2) with slide (3), wherein the slide (3) is linearly displaceable towards the inserted radio telephone (2),
**characterised in that** the slide (3) comprises contacting means (7) or at least one contacting unit (7) for the transmission of data and/or energy or for electrical and/or optical coupling onto at least one interface on the radio telephone,
**and in that** in the event of a withdrawal movement of the slide (3) away from the radio telephone (20), said radio telephone is supported on the shell (9).

2. A device according to one of the preceding Claims,
**characterised in that** a region of the shell (9) opposite the slide (3) engages over the radio telephone (20).

3. A device according to one of the preceding Claims,
**characterised in that** a lug (13) disposed opposite the slide (13) engages in the head region (27) of the radio telephone (20).

4. A device according to Claim 1,
**characterised in that** the slide (3) locks in at least one of its positions.

5. A device according to one of the preceding Claims,
**characterised in that** the slide (3) locks in the position which holds the radio telephone (20) and/or in the position which releases the radio telephone (20).

6. A device according to one of the preceding Claims,
**characterised in that** the contacting unit (7) comprises sprung contact pins.

7. A device according to one of the preceding Claims,
**characterised in that** the contacting unit (7) comprises contact sleeves or contact forks for housing contact pins.

8. A device according to one of the preceding Claims,
**characterised in that** the slide (3) is locked in its position releasing the radio telephone (20) by a mechanical or an electrical catch as long as the radio telephone does not correctly lie in the shell (9) for the housing the radio telephone (20).

9. A device according to one of the preceding Claims,
**characterised in that** the slide (3) comprises at least one recessed grip for its operation.

10. A device according to one of the preceding Claims,
**characterised in that** the radio telephone (2) is supported on the shell (9) during a slip-on movement of the slide (3) towards the radio telephone.

11. A device according to one of the preceding Claims,
**characterised in that** the cable lead (8) is directly connected to the slide (3).

12. A device according to one of the preceding Claims,
**characterised in that** the holder (1) comprises a mechanical contacting of the radio telephone (20) apart from the electrical contacting unit (7).

## Revendications

1. Dispositif pour le support et la mise en contact d'un radiotéléphone (20), dans lequel le maintien du radiotéléphone (20) est obtenu par l'intermédiaire d'une fixation ou d'un dispositif de serrage (1) comportant une coquille (2) avec un coulisseau (3), ledit coulisseau (3) pouvant coulisser linéairement vers le radiotéléphone mis en place,
**caractérisé en ce que** le coulisseau (3) comporte des moyens de mise en contact (7) ou au moins une unité de mise en contact (7) pour la transmission de données et/ou la transmission d'énergie ou pour le couplage électrique et/ou optique à au moins une interface au radiotéléphone et **en ce que** ledit radiotéléphone (20) s'appuie sur la coquille (9) lorsque le coulisseau (3) est tiré à l'opposé dudit radiotéléphone.

2. Dispositif selon la revendication 1,
**caractérisé en ce qu'**une zone de la coquille (9), opposée au coulisseau (3), recouvre le radiotéléphone (20).

3. Dispositif selon l'une des revendications précédentes,
**caractérisé en ce qu'**un tenon (13), agencé à l'opposé du coulisseau (3), pénètre dans la tête (27) du radiotéléphone (20).

4. Dispositif selon la revendication 1,
**caractérisé en ce que** le coulisseau (3) s'encliquète à au moins l'une de ses positions.

5. Dispositif selon l'une des revendications précédentes,
**caractérisé en ce que** le coulisseau (3) s'encliquète dans la position de maintien du radiotéléphone (20) et/ou dans la position libérant le radiotéléphone (20).

6. Dispositif selon l'une des revendications précédentes,
**caractérisé en ce que** l'unité de mise en contact (7) comporte des broches de contact à ressort.

7. Dispositif selon l'une des revendications précédentes,
**caractérisé en ce que** l'unité de mise en contact (7) comporte des douilles de contact ou des fourchettes de contact pour recevoir des broches de contact.

8. Dispositif selon l'une des revendications précédentes,
**caractérisé en ce que** le coulisseau (3) est bloqué dans sa position libérant le radiotéléphone (20) par un verrou mécanique ou électrique aussi longtemps que la position du radiotéléphone (20) dans sa coquille de réception (9) n'est pas correcte.

9. Dispositif selon l'une des revendications précédentes,
**caractérisé en ce que** le coulisseau (3) comporte au moins une prise d'actionnement.

10. Dispositif selon l'une des revendications précédentes,
**caractérisé en ce que** le radiotéléphone (20) s'appuie contre la coquille (9) lors d'un coulissement du coulisseau (3) vers le radiotéléphone.

11. Dispositif selon l'une des revendications précédentes,
**caractérisé en ce que** le câble d'alimentation (8) est relié directement au coulisseau (3).

12. Dispositif selon l'une des revendications précédentes,
**caractérisé en ce que** la fixation (1) comporte, à côté de l'unité de mise en contact électrique (7), une unité de mise en contact mécanique du radiotéléphone (20).
